# EUROPEAN PATENT SPECIFICATION

(11) **EP 3 155 046 B1**
(45) Date of publication and mention of the grant of the patent: **01.08.2018**
(21) Application number: 15728097.5
(22) Date of filing: 03.06.2015
(51) Int. Cl.: C08L 23/00

(54) **POLYMER ANTIMICROBIAL COMPOSITION**
ANTIMIKROBIELLE POLYMERZUSAMMENSETZUNG
COMPOSITION POLYMÈRE ANTIMICROBIENNE

(30) Priority: 12.06.2014 GB 201410514
(43) Date of publication of application: 19.04.2017
(73) Proprietor: Fantex Limited, Wolverhampton, West Midlands WV10 7DF (GB)
(72) Inventor: HARRIS, Keith John, Blackwood Caerphilly NP12 1GL (GB)
(74) Representative: Murgitroyd & Company
(86) International application number: PCT/GB2015/051615
(87) International publication number: WO 2015/189569

(56) References cited:
- CN-A- 103 772 800
- US-A1- 2014 154 335

## Description

This invention relates to a polymer composition comprising a thermoplastic alkyl polymer and an antimicrobial. This invention also relates to products and fabrics incorporating the polymer composition.

### Background

It is known to incorporate antimicrobials into consumer products in order to inhibit the growth of, for example, bacteria and/or fungi and/or viruses. However, the selection of a suitable antimicrobial depends significantly on the product into which it is to be incorporated. This invention seeks to provide a polymer composition comprising an antimicrobial which can be utilised in a wide range of products, and in particular which can be made into fibres which can be formed into fabrics. This invention also seeks to provide a polymer composition comprising an antimicrobial which has low toxicity to human and other mammalian cells.

US 2014/154335 A1 describes a master batch composition utilising inorganic antimicrobials, silver being particularly preferred. CN 103 772 800 A describes an EVA foam which includes a chlorophenol.

### Statement of invention

This invention relates to an antimicrobial master batch polymer composition comprising:
(a) a thermoplastic alkyl polymer, wherein the polymer is polypropylene or polyethylene, and
(b) an antimicrobial, wherein the antimicrobial is a chlorophenol compound.

In relation to this invention, the term "antimicrobial" is used to refer to a substance that can kill microorganisms or inhibit their growth. Examples of antimicrobials include germicides, antibiotics, antibacterials, antivirals and antifungals. It is preferred that the antimicrobial provides up to a log 4 reduction in the number of cells of the microorganism in question. For example, a reduction in the number of cells from 10⁸ to 10⁴ would be a log 4 reduction (ie killing of 99.9% of the cells in question).

In relation to this invention, the term "master batch" is used to refer to a mixture of ingredients which can be added to a polymer in order to impart a particular property to that polymer (in this invention, antimicrobial activity). The use of a master batch, rather than adding the antibacterial directly to the final polymer composition, can make subsequent processing easier as well as improving the homogeneity of the antimicrobial in the final polymer.

It is preferred that the thermoplastic alkyl polymer is polypropylene.

Preferably, the chlorophenol compound is 4-chloro-3,5-dimethylphenol, 2-chloro-3-methyl-phenol, 2,4-dichloro-3,5-dimethylphenol, 2,4-dichloro-5-methylphenol, 4-chloro-3-methylphenol and/or 2,4,6-trichlorophenol. It has been surprisingly found that these antimicrobials perform especially well in the compositions of the invention. In particular, compared to other antimicrobials they provide improved retention of antimicrobial activity after the heat treatment involved in plastics processing. In some embodiments, 4-chloro-3,5-dimethylphenol is particularly preferred.

Alternative antimicrobials include 2-bromo-2-nitropropane-1,3-diol and quaternary ammonium compounds such as quaternary ammonium alkyl compounds. Quaternary ammonium alkyl compounds include benzalkonium chloride and didecyldimethylammonium chloride

Preferably, the antimicrobial master batch polymer composition comprises 5-35wt% of the antimicrobial, more preferably 5-15wt%, even more preferably about 10wt% of the antimicrobial. In preferred embodiments, the remainder of the antimicrobial master batch polymer composition comprises the thermoplastic alkyl polymer and incidental impurities.

This invention also relates to method of making an antimicrobial master batch polymer composition as described above, comprising the steps of:
(a) mixing a thermoplastic alkyl polymer powder, wherein the polymer is polypropylene or polyethylene, with an antimicrobial powder, wherein the antimicrobial is a chlorophenol compound,
(b) melting the mixture, and
(c) cooling the mixture.

The weight ratio of thermoplastic alkyl polymer powder to antimicrobial powder in the mixing step is preferably between 17:3 and 19:1, more preferably about 9:1.

In some embodiments, the composition is extruded after the melting step and before the cooling step. The extrusion step may be carried out using a twin-screw extruder. The extrusion temperature is preferably 140-210°C, more preferably about 180°C.

The cooling step preferably comprises cooling in a water bath. The water bath is preferably at room temperature (for example, around 20-25°C).

It is preferred that after step (c) the method comprises the step of: (d) forming the mixture into pellets. This can be done, for example, by chopping or crushing. Alternatively, the mixture may be formed into granules.

This invention therefore also relates to a polymer composition comprising:
(a) an antimicrobial master batch polymer composition as described above, and
(b) a thermoplastic alkyl polymer.

The thermoplastic alkyl polymer is polypropylene or polyethylene. The thermoplastic alkyl polymer is normally the same as that in the antimicrobial master batch polymer composition. When the thermoplastic alkyl polymer is polypropylene, it is preferably homopolymer polypropylene.

Preferably, the polymer composition comprises 1-20wt% of the antimicrobial master batch polymer composition, more preferably 1-10wt%, even more preferably 1-8wt%. In preferred embodiments, the remainder of the polymer composition comprises the thermoplastic alkyl polymer and incidental impurities.

This invention also relates to method of making a polymer composition as described above, comprising the steps of:
(a) mixing the antimicrobial master batch polymer composition with a thermoplastic alkyl polymer powder,
(b) melting the mixture, and
(c) cooling the mixture.

The weight ratio of antimicrobial master batch polymer composition to thermoplastic alkyl polymer powder in the mixing step is preferably between 1:100 and 1:5, more preferably between 1:100 and 1:10, even more preferably between 1:100 and 2:25.

The polymer composition may subsequently be processed as described above in relation to the antimicrobial master batch polymer composition.

This invention also relates to moulded products comprising the polymer composition. Example products include bowls such as pet bowls (dog, cat or horse bowls); waste bins; curtain hooks; lavatory seats; sharps boxes and other moulded products used in the medical field; chopping boards and other moulded products used in food preparation; containers and mats.

This invention also relates to a method of making a fabric comprising the polymer composition described above, the method comprising the steps of:
(a) forming fibres of the polymer composition, and
(b) binding the fibres together.

The forming step may be carried out by extruding the composition through a die at high pressure. The binding step may be carried out by compression, for example using a PTFE belt.

This invention also relates to a fabric comprising the polymer composition as described above. The fabric is preferably a nonwoven fabric (ie one that has not been either woven or knitted) comprising fibres of the polymer composition. The fabric is typically in the form of a sheet or web. In certain applications, it can be advantageous to include the antimicrobial in the polymer from which the fabric is made (as in this invention) rather than spraying the antimicrobial onto the fabric after manufacture. Providing the antimicrobial in the polymer composition can result in (i) a more even distribution of the antimicrobial in the fabric, and (ii) a reduction in the weight added to the fabric (compared to spraying the antimicrobial onto the fabric).

This invention also relates to products comprising the fabric described above. Example products include curtains, such as shower curtains or those used in hospital cubicles; blinds; wheelchair seat covers; pet beds, such as dog or cat beds; or blankets, such as horse blankets.

### Example

A polymer composition was formed by mixing polypropylene (PP) powder with 4-chloro-3,5-dimethylphenol (PCMX) powder in a weight ratio of approximately 9:1. The mixture was then passed through a twin-screw extruder at a temperature of around 180°C. The resulting extruded composition was then cooled in a water bath and formed into pellets. These pellets were then mixture with homopolymer polypropylene (HPPL) in the weight amounts described below. The samples were then extruded at 180°C and formed into sheets.

Three samples were prepared as follows:
(i) 10wt% PCMX in PP, 2wt% in HPPL,
(ii) 10wt% PCMX in PP, 4wt% in HPPL, and
(iii) 10wt% PCMX in PP, 6wt% in HPPL.

The samples were in good visible condition.

70 x 45mm panels of each of the samples were surface inoculated with 0.1ml culture of the test species as detailed in Table 1 below. The inoculum was spread over the surface using a sterile L shaped spreader and the panels stored at room temperature. At 30 minutes after inoculation the panel surfaces were swabbed and washed with sterile Maximum Recovery Diluent containing preservative neutralisers and the number of survivors determined by serial dilution and plate counting. The plates were then incubated at 34°C to 36°C for 48 hours.

**Table 1**

| **Test species** | **Initial inoculum level Colony forming units per panel** |
|---|---|
| Mixed bacteria: *Pseudomonas aeruginosa,* (ATCC 15442) *Escherichia coli,* (ATCC 10536) *Staphylococcus aureus,* (ATCC 6538) *Enterococcus hirae,* (ATCC 10541) | 7.0x10⁴ |
| Mixed fungi: *Candida albicans,* (ATCC 10231) *Aspergillus brasilliens,* (ATCC 16404) | 1.1x10⁴ |

The test results for the mixed bacteria at 30 minutes after inoculation are shown in Table 2 below.

**Table 2**

| **Sample** | **% Reduction at 30 minutes** |
|---|---|
| 1 | >99.9 |
| 2 | >99.9 |
| 3 | >99.9 |

The test results for the mixed fungi at 30 minutes after inoculation are shown in Table 3 below.

**Table 3**

| **Sample** | **% Reduction at 30 minutes** |
|---|---|
| 1 | >99.9 |
| 2 | >99.9 |
| 3 | >99.9 |

These test results indicate that a reduction of greater than 99.9% kill (ie a greater than log 3 reduction) was achieved in a microbial challenge test against a cocktail of bacteria and fungi. Thus, the panels demonstrated a >99.9% reduction in the numbers of bacteria and fungi when the composition was applied to the surface of the plastic panels.

## Claims

1. An antimicrobial master batch polymer composition comprising:
(a) a thermoplastic alkyl polymer, wherein the polymer is polypropylene or polyethylene, and
(b) an antimicrobial, wherein the antimicrobial is a chlorophenol compound.

2. A composition as claimed in claim 1, wherein the chlorophenol compound is 4-chloro-3,5-dimethylphenol, 2-chloro-3-methyl-phenol, 2,4-dichloro-3,5-dimethylphenol or 2,4,6-trichlorophenol.

3. A composition as claimed in either claim 1 or claim 2, comprising 5-15wt% of the antimicrobial.

4. A composition as claimed in claim 3, wherein the remainder of the antimicrobial master batch polymer composition comprises the thermoplastic alkyl polymer and incidental impurities.

5. A method of making a composition as claimed in any one of preceding claims, comprising the steps of:
(a) mixing a thermoplastic alkyl polymer powder, wherein the polymer is polypropylene or polyethylene, with an antimicrobial powder, wherein the antimicrobial is a chlorophenol compound,
(b) melting the mixture, and
(c) cooling the mixture.

6. A method as claimed in claim 5, wherein the weight ratio of thermoplastic alkyl polymer powder to antimicrobial powder in the mixing step is between 17:3 and 19:1.

7. A polymer composition comprising:
(a) an antimicrobial master batch polymer composition as claimed in any one of claims 1-4, and
(b) a thermoplastic alkyl polymer.

8. A polymer composition as claimed in claim 7, comprising 1-10wt% of the antimicrobial master batch polymer composition.

9. A moulded product comprising the polymer composition of either claim 7 or claim 8.

10. A moulded product as claimed in claim 9, wherein the product is a bowl, waste bin, curtain hook, lavatory seat, sharps box, chopping board, container or mat.

11. A method of making a fabric comprising the polymer composition as claimed in either claim 7 or claim 8, the method comprising the steps of:
(a) forming fibres of the polymer composition, and
(b) binding the fibres together.

12. A fabric comprising the polymer composition as claimed in either claim 7 or claim 8.

13. A curtain, blind, wheelchair seat cover, pet bed or blanket comprising the fabric as claimed in claim 12.

## Patentansprüche

1. Eine antimikrobielle Masterbatch-Polymerzusammensetzung, die Folgendes beinhaltet:
(a) ein thermoplastisches Alkylpolymer, wobei das Polymer Polypropylen oder Polyethylen ist, und
(b) eine antimikrobielle Substanz, wobei die antimikrobielle Substanz eine Chlorphenolverbindung ist.

2. Zusammensetzung gemäß Anspruch 1, wobei die Chlorphenolverbindung 4-Chlor-3,5-dimethylphenol, 2-Chlor-3-methylphenol, 2,4-Dichlor-3,5-dimethylphenol oder 2,4,6-Trichlorphenol ist.

3. Zusammensetzung gemäß Anspruch 1 oder Anspruch 2, welche die antimikrobielle Substanz zu 5-15 Gew.-% beinhaltet.

4. Zusammensetzung gemäß Anspruch 3, wobei das thermoplastische Alkylpolymer und anfallende Unreinheiten den Rest der antimikrobiellen Masterbatch-Polymerzusammensetzung ausmachen.

5. Ein Verfahren zum Herstellen einer Zusammensetzung gemäß einem der vorhergehenden Ansprüche, das die folgenden Schritte beinhaltet:
(a) Mischen eines Pulvers eines thermoplastischen Alkylpolymers, wobei das Polymer Polypropylen oder Polyethylen ist, mit einem Pulver einer antimikrobiellen Substanz, wobei die antimikrobielle Substanz eine Chlorphenolverbindung ist,
(b) Schmelzen der Mischung und
(c) Abkühlen der Mischung.

6. Verfahren gemäß Anspruch 5, wobei das Gewichtsverhältnis des Pulvers des thermoplastischen Alkylpolymers zu dem Pulver der antimikrobiellen Substanz in dem Mischschritt zwischen 17 : 3 und 19 : 1 beträgt.

7. Eine Polymerzusammensetzung, die Folgendes beinhaltet:
(a) eine antimikrobielle Masterbatch-Polymerzusammensetzung gemäß einem der Ansprüche 1-4 und
(b) ein thermoplastisches Alkylpolymer.

8. Polymerzusammensetzung gemäß Anspruch 7, die zu 1-10 Gew.-% die antimikrobielle Masterbatch-Polymerzusammensetzung beinhaltet.

9. Ein geformtes Produkt, das die Polymerzusammensetzung gemäß Anspruch 7 oder Anspruch 8 beinhaltet.

10. Geformtes Produkt gemäß Anspruch 9, wobei das Produkt eine Schale, ein Mülleimer, ein Vorhanghaken, ein Toilettensitz, ein Entsorgungsbehälter für scharfe/spitze Instrumente, ein Schneidebrett, ein Behälter oder eine Matte ist.

11. Ein Verfahren zum Herstellen eines Stoffs, der die Polymerzusammensetzung gemäß Anspruch 7 oder Anspruch 8 beinhaltet, wobei das Verfahren die folgenden Schritte beinhaltet:
(a) Bilden von Fasern aus der Polymerzusammensetzung und
(b) Binden der Fasern aneinander.

12. Ein Stoff, der die Polymerzusammensetzung gemäß Anspruch 7 oder Anspruch 8 beinhaltet.

13. Ein Vorhang, ein Rollo, ein Rollstuhl-Sitzbezug, ein Haustierbett oder eine Decke, die den Stoff gemäß Anspruch 12 beinhalten.

## Revendications

1. Une composition polymère à base d'un mélange-maître antimicrobien comprenant :
(a) un polymère alkyle thermoplastique, dans laquelle le polymère est le polypropylène ou le polyéthylène, et
(b) un antimicrobien, dans laquelle l'antimicrobien est un composé de chlorophénol.

2. Une composition telle que revendiquée dans la revendication 1, dans laquelle le composé de chlorophénol est le 4-chloro-3,5-diméthylphénol, le 2-chloro-3-méthylphénol, le 2,4-dichloro-3,5-diméthylphénol ou le 2,4,6-trichlorophénol.

3. Une composition telle que revendiquée soit dans la revendication 1, soit dans la revendication 2, comprenant de 5 à 15 % en poids de l'antimicrobien.

4. Une composition telle que revendiquée dans la revendication 3, dans laquelle le reste de la composition polymère à base d'un mélange-maître antimicrobien comprend le polymère alkyle thermoplastique et des impuretés fortuites.

5. Une méthode de fabrication d'une composition telle que revendiquée dans n'importe laquelle des revendications précédentes, comprenant les étapes consistant à :
(a) mélanger une poudre de polymère alkyle thermoplastique, dans laquelle le polymère est le polypropylène ou le polyéthylène, avec une poudre antimicrobienne, dans laquelle l'antimicrobien est un composé de chlorophénol,
(b) faire fondre le mélange, et
(c) faire refroidir le mélange.

6. Une méthode telle que revendiquée dans la revendication 5, dans laquelle le rapport en poids de la poudre de polymère alkyle thermoplastique à la poudre antimicrobienne dans l'étape consistant à mélanger est compris entre 17/3 et 19/1.

7. Une composition polymère comprenant :
(a) une composition polymère à base d'un mélange-maître antimicrobien telle que revendiquée dans n'importe laquelle des revendications 1 à 4, et
(b) un polymère alkyle thermoplastique.

8. Une composition polymère telle que revendiquée dans la revendication 7, comprenant de 1 à 10 % en poids de la composition polymère à base d'un mélange-maître antimicrobien.

9. Un produit moulé comprenant la composition polymère soit de la revendication 7, soit de la revendication 8.

10. Un produit moulé tel que revendiqué dans la revendication 9, dans lequel le produit est une écuelle, une poubelle, un crochet pour rideau, une lunette de toilette, une boîte pour objets pointus et tranchants, une planche à découper, un récipient ou un tapis.

11. Une méthode de fabrication d'un tissu comprenant la composition polymère telle que revendiquée soit dans la revendication 7, soit dans la revendication 8, la méthode comprenant les étapes consistant à :
(a) former des fibres de la composition polymère, et
(b) lier les fibres ensemble.

12. Un tissu comprenant la composition polymère telle que revendiquée soit dans la revendication 7, soit dans la revendication 8.

13. Un rideau, un store, une housse de siège pour fauteuil roulant, une couverture ou un lit pour animaux domestiques comprenant le tissu tel que revendiqué dans la revendication 12.
